# EUROPEAN PATENT APPLICATION

(11) **EP 4 403 772 A1**
(43) Date of publication of application: **24.07.2024**
(21) Application number: 24152017.0
(22) Date of filing: 16.01.2024
(51) Int. Cl.: F04B 49/06, A47J 31/46, A47J 31/52, F04B 49/08, F04B 49/10, F04B 53/16

(54) **SENSORIZED ACCESSORY FOR PUMPS, PARTICULARLY FOR COFFEE MACHINES**

(30) Priority: 18.01.2023 IT 202300000657
(71) Applicant: Fluid-O-Tech S.r.l., 20094 Corsico (MI) (IT)
(72) Inventor: ANDREIS, Diego, 20094 CORSICO (MI) (IT); BUTERA, Francesco, 20094 CORSICO (MI) (IT)
(74) Representative: Bianchetti & Minoja with Trevisan & Cuonzo IPS SRL

(57) **Abstract**

The present invention concerns a sensorized accessory (1) for pumps, particularly for coffee machines, comprising an inlet fitting (2) configured to be coupled to a delivery port (51) of a pump (50) and a body (3) inside which the followings are realized:
- an inlet conduit (4) configured to be placed in fluid communication with said delivery port (51) of said pump (50) by means of said inlet fitting (2);
- at least one sensorized outlet conduit (5), in fluid communication with said inlet conduit (4), a device for detecting (7) the flow and/or pressure of a fluid flowing along said at least one sensorized outlet conduit (5) being associated to said at least one sensorized outlet conduit (5), said detection device (7) being adapted to generate signals indicative of the flow and/or pressure of said fluid.

## Description

### FIELD OF THE INVENTION

The present invention concerns a sensorized accessory for pumps, particularly for coffee machines, as well as a pump provided with such a sensorized accessory.

### BACKGROUND

As is known, the machines for preparing beverages, and in particular coffee, comprise a hydraulic circuit that connects to one another the following:
- a source of water supply, derived from the water network or from a special reservoir;
- a dispensing group, through which the beverage is dispensed and in which, in the case of coffee, the brewing inside the dose of coffee powder and coffee extraction occur;
- a boiler to heat the water, and possibly to generate steam;
- a pump to send pressurised water to the dispensing group.

The need to regulate the flow rate and pressure of the water flow that is sent to the dispensing group requires, inside the coffee machines of known type, a control unit which, together with sensors and valves appropriately distributed in the aforementioned hydraulic circuit, is adapted to control and regulate the dispensing of the beverage, and in particular the operation of the pump.

Currently, therefore, the coffee machines comprise pressure and/or flow sensors variously distributed inside the hydraulic circuit of the machine itself, which are adapted to generate signals that the control unit of the coffee machine uses to control the operation of the pump and of the other components of the machine in order to control and regulate the preparation of the beverage in terms of dose and quality in the cup, for example by profiling the pressure or the temperature of the water to obtain an excellent extraction of the coffee. As a result, the operating circuits of the coffee machines of known type, both hydraulic and electrical (and electronic) ones, are quite complex, and this entails complications and difficulties both in the steps of design and production of the coffee machine, and when carrying out any maintenances, as well as overall important dimensions.

### SUMMARY OF THE INVENTION

In light of the above, the task of the present invention is to make a sensorized accessory for pumps that overcomes the limits of the prior art by allowing the pump itself to be provided with the function of detecting the properties of the flow of the pumped fluid.

Within this task, it is the object of the present invention to make a sensorized accessory that, applied to a pump, allows to simplify the design, the production and the maintenance of the coffee machines.

Another object of the present invention is to sensorise conventional type pumps, while limiting the overall footprint of the pump and sensor assembly.

A further object of the invention consists in making a sensorized accessory that is capable of giving the widest guarantees of reliability and safety in use.

Another object of the invention is to make a sensorized accessory whose application to pumps makes them economically competitive compared to the prior art.

With particular reference to the coffee machine sector, yet another object consists in making a sensorized accessory that allows to regulate, for example through a closed-loop feedback control, the operation of the pump to supply a desired amount of water at a desired pressure and temperature.

The above task, as well as the purposes mentioned and others that will become clearer later, are achieved by a sensorized accessory for pumps, particularly for coffee machines, according to claim 1, as well as by a pump according to claim 12 and by a machine for dispensing a beverage according to claims 14 and 15.

### LIST OF FIGURES

Further characteristics and advantages of the present invention will become more apparent from the exemplary but non-limiting description of a preferred embodiment of the present invention which will be given hereinafter with the aid of the attached drawings in which:
- figures 1 and 1a are two different perspective views of an embodiment of a sensorized accessory, according to the invention, applied to a positive-displacement pump;
- figure 2 is a perspective view of the sensorized accessory only, according to the invention;
- figure 3 is a side sectional view of the sensorized accessory of figure 2, according to the invention;
- figure 4 is a front sectional view of the sensorized accessory of figure 2, according to the invention;
- figure 5 schematically illustrates the detection device forming part of the sensorized accessory, according to the invention;
- figure 6 is a perspective view of the pump with sensorized accessory illustrated in figures 1 and 1a, with a motor group attached;
- figure 7 is a perspective view of a variant of a sensorized accessory, applied to a positive-displacement pump;
- figure 8 is a side elevation view of the assembly of figure 7;
- figure 9 is a top plan view of the assembly of figure 7.

### DETAILED DESCRIPTION OF THE INVENTION

With particular reference to the figures, the sensorized accessory for pumps, particularly for pumps for coffee machines, is indicated with reference number 1.

The sensorized accessory 1 comprises an inlet fitting 2 configured to be coupled to a delivery port 51 of a pump 50, and a body 3 inside which the followings are realized:
- an inlet conduit 4 configured to be placed in fluid communication with the delivery port 51 of the pump 50 by means of the inlet fitting 2;
- at least one sensorized outlet conduit 5, 5', in fluid communication with the inlet conduit 4, a detection device 7 for detecting the flow and/or pressure of a fluid flowing along said at least one sensorized outlet conduit 5 being associated to said at least one sensorized outlet conduit 5, said detection device 7 being adapted to generate signals indicative of the flow and/or pressure of the fluid.

Preferably the detection device 7 comprises a flow sensor and/or a pressure sensor.

Preferably, the detection device 7 is a device for detecting both the flow and the pressure and is adapted to generate signals indicative of both the flow and the pressure of the fluid flowing along the at least one sensorized outlet conduit 5. For example, the detection device 7 may comprise both a flow sensor and a pressure sensor.

Preferably, the body 3 of the sensorized accessory 1, inside which the at least one sensorized outlet conduit 5 is realized, is made of a polymeric material, such as plastic, for example with injection moulding techniques. Alternatively, the body 3 of the sensorized accessory 1 can be made of a metal or metal alloy, such as steel, for example.

Preferably, at least one free outlet conduit 6 is also realized inside the body 3, in fluid communication with the inlet conduit 4. Said free outlet conduit 6 is preferably free of flow and/or pressure detection devices. Preferably said free outlet conduit 6 comprises a restriction 8 configured to equalize the flows of the fluid outgoing through the sensorized outlet conduit 5 and through the free outlet conduit 6.

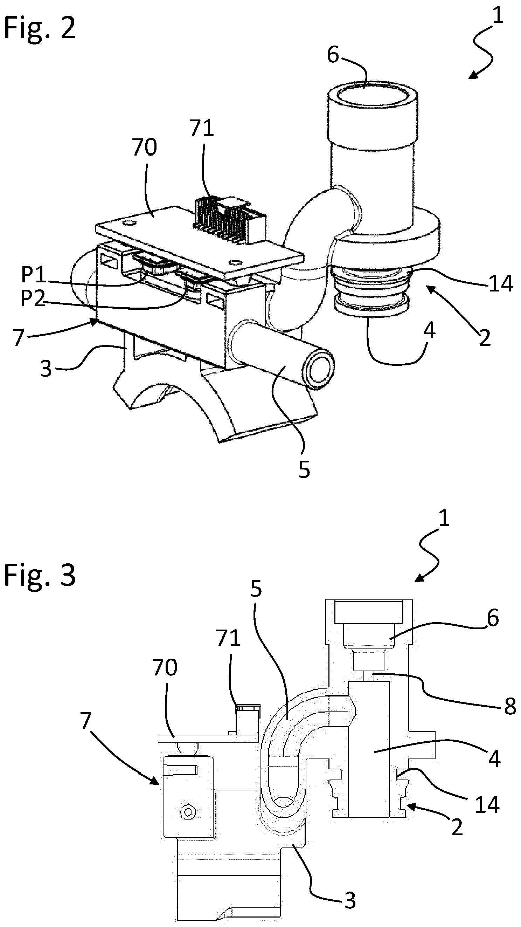

As illustrated in figure 3, the free outlet conduit 6 can be aligned with the inlet conduit 4, i.e. the free outlet conduit 6 and the inlet conduit 4, having substantially the same axial direction of longitudinal development. The sensorized outlet conduit 5 can instead project from the inlet conduit 4 in a direction transverse to the axial direction of longitudinal development of the inlet conduit 4.

Preferably, the sensorized outlet conduit 5 has a minimum length and a development profile such as to allow the application of the detection device 7.

Preferably, the detection device 7 is also adapted to generate a signal indicative of the temperature of the fluid flowing along the at least one sensorized outlet conduit 5.

Preferably, in fact, the detection device 7 comprises an infrared temperature sensor T.

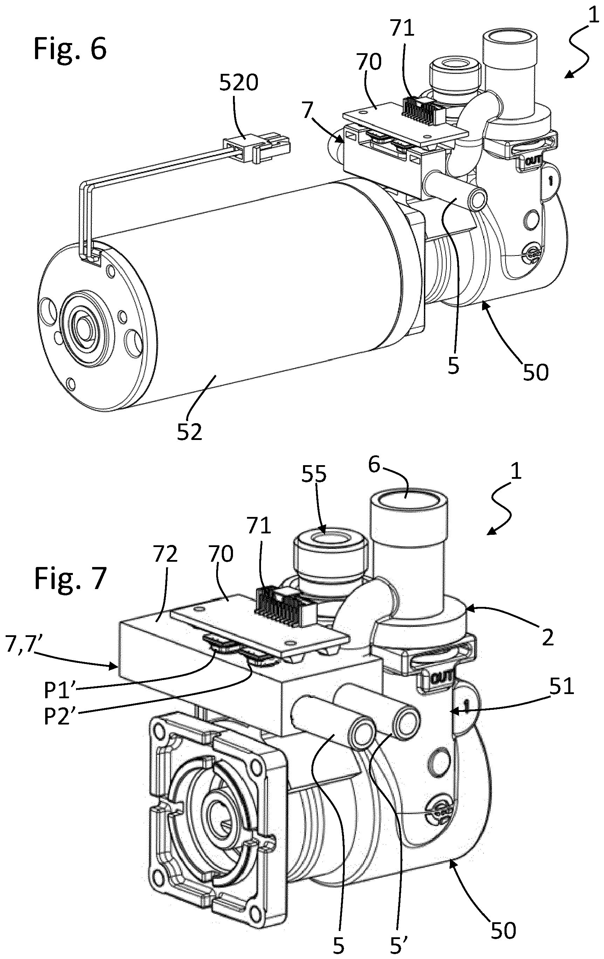

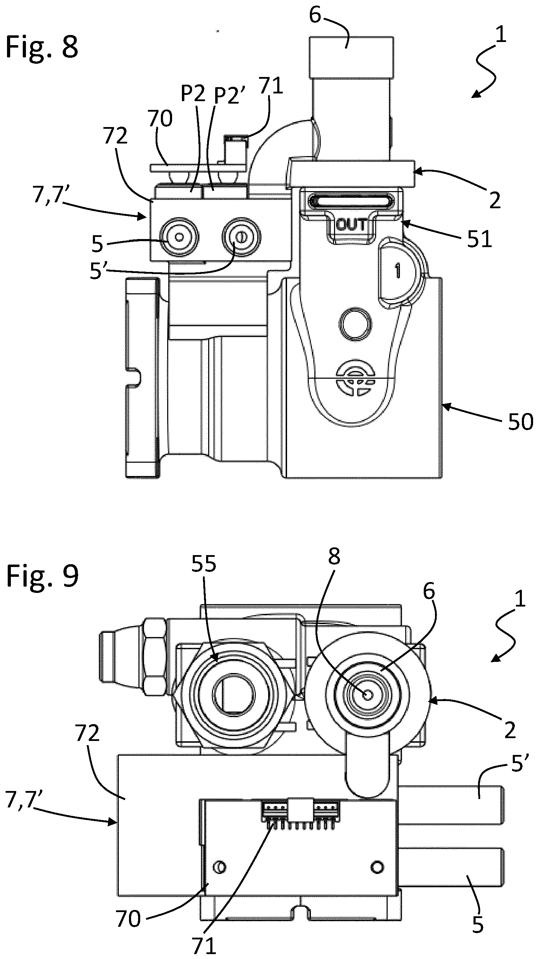

Preferably the sensorized accessory 1 comprises a plurality of sensorized outlet conduits 5, 5', wherein each sensorized outlet conduit 5, 5' is associated with a respective detection device 7, 7'. In the case of a beverage dispensing machine comprising a plurality of beverage dispensing groups each sensorized outlet conduit 5, 5' is configured to be placed in fluid communication with a respective dispensing group. Figures 7, 8 and 9 illustrate a variant of the sensorized accessory 1 comprising two sensorized outlet conduits 5, 5' to which two detection devices 7, 7' are associated which preferably share a same container casing 72 and, as explained below, a same processing unit 70.

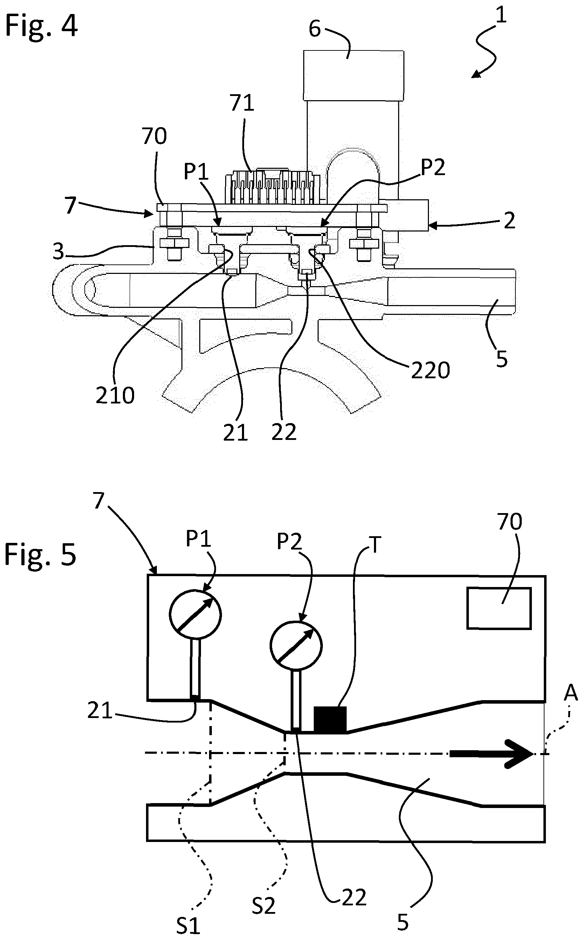

As illustrated in figure 4, and more schematically in figure 5, the at least one sensorized outlet conduit 5 can have at least two distinct cross-sections S1, S2 distributed along the axial development direction A of the sensorized outlet conduit 5 itself in correspondence of the point of application of the detection device 7 itself. At least one first cross-section S1 has a sectional area that has an extension larger or smaller, preferably larger, than the sectional area of the second cross-section S2 downstream of the first cross-section S 1. Furthermore, the detection device 7 comprises at least two pressure sensors P1, P2 arranged in correspondence of said two distinct cross-sections S1, S2 and configured to detect the instantaneous pressure of the fluid in correspondence of said two distinct cross-sections S1, S2. The detection device 7 is adapted to generate signals indicative of the flow and/or pressure of the fluid on the basis of the instantaneous pressure detected in correspondence of the two distinct cross-sections S1, S2.

Preferably the pressure sensors P1 and P2 are miniaturized sensors, preferably of the MEMS type, from the acronym micro electro-mechanical systems.

Preferably, each of said pressure sensors P1 and P2 comprises a sensing element 21, 22 configured to face the internal volume of the sensorized outlet conduit 5 and to be in direct contact with the fluid.

Preferably, said sensing element 21, 22 is integrated into the wall of the conduit 5 itself and even more preferably positioned flush with the internal face of the wall itself.

Advantageously, the miniaturization of the pressure sensors P1 and P2 and the positioning of the relative sensing elements 21, 22 flush with the wall of the conduit 5 and in direct contact with the fluid flowing in the conduit 5 allow to guarantee the correct interfacing of the sensors minimizing dead spaces as much as possible, so as to make it possible to clean the conduit 5 itself, according to current international standards. Preferably, for example, lateral connection channels adapted to put the conduit 5 itself and the pressure sensors in fluid communication can be avoided.

The pressure sensors P1 and P2 are preferably absolute pressure sensors.

As illustrated in figure 4, two seats 210 and 220 are realized inside the body 3 which are adapted to house the pressure sensors P1 and P2 in correspondence of the sensorized outlet conduit 5.

With reference to the variant of the sensorized accessory 1 illustrated in figures 7, 8 and 9, the pressure sensors belonging to the first detection device 7 are indicated with P1 and P2 and the pressure sensors belonging to the second detection device 7'with P1' and P2'.

Preferably, the detection device 7 comprises a processing unit 70 configured to acquire and process one or more of said signals indicative of the pressure and/or flow (and/or temperature) of the fluid flowing along the sensorized outlet conduit 5. The detection device 7 comprises an electrical connector 71 configured to make the signals acquired and processed by the processing unit 70 available to an external device.

As explained below, the external device can be the pump 50 itself to which the sensorized accessory 1 is applied, or a beverage dispensing machine inside which there is a pump 50 equipped with the sensorized accessory 1.

The present invention therefore also concerns a pump 50 equipped with the sensorized accessory 1 as described above.

As illustrated in figure 6, said pump 50 may comprise a motor group 52, operable on the basis of the signals indicative of the flow and/or pressure generated by the detection device 7.

In essence, the sensorized accessory 1 can be applied to the delivery port 51 of the pump 50, by means of the inlet fitting 2, and electrically connected to the motor group 52 of the pump 50 itself, by means of the electrical connector 71.

In this way, the processing unit 70 of the sensorized accessory 1 allows to control, with a closed-loop feedback, the operation of the motor group 52 of the pump 50, on the basis of the flow and/or pressure and/or temperature signals detected on the fluid by the detection device 7. For example, the processing unit 70 may be configured to generate a pulse-width modulation (PWM) control signal to be provided to the motor group 52 of the pump 50.

The pump 50 illustrated by way of example in the accompanying figures is a pump capable of dispensing liquids at pressures comprised between 0 and 20 bar, with flow rates up to 500 l/h.

This pump 50 has a pump body 53 made of a polymeric material, for example plastic. Alternatively, the pump body 53 can be made of a metal or metal alloy, such as steel, for example.

Preferably, the inlet fitting 2 comprises a first locking element configured to couple stably with a corresponding second locking element present in the pump 50. These two locking elements can constitute a quick lock-and-release system.

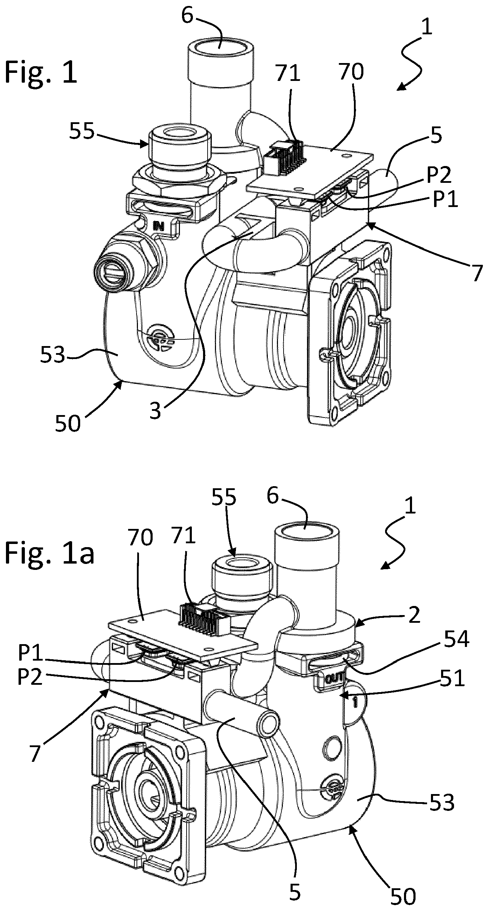

With reference to the example of pump 50 reported in the accompanying figures, the second locking element present in the pump 50 is defined by an elastic fork 54, made of metal, and placed in the pump body 53 in correspondence of the end of the delivery port 51. This elastic fork 54 is visible in figure 1a. The first locking element present in the sensorized accessory 1 can therefore be defined by a seat 14, either circular or semi-circular, configured to receive the arms of the elastic fork 54 so as to ensure that the sensorized accessory 1 is locked to the pump 50. In this case, when the fitting 2 of the sensorized accessory 1 is inserted into the delivery port 51 of the pump 50, the arms of the fork 54 engage by snapping into the corresponding seat 14 realized in correspondence of the inlet conduit 4 of the sensorized accessory 1 itself.

Alternatively, the inlet fitting 2 of the sensorized accessory 1 may comprise locking mechanisms of different types, for example mechanical, screw, clip, or snap, or magnetic ones.

Preferably, the sensorized accessory 1 has a shape and dimension such that, when it is associated with the pump 50, it does not constitute any impediment to access to the suction port 55 of the pump 50.

The present invention also concerns a machine for dispensing a beverage, for example coffee, comprising a pump 50 provided with a sensorized accessory 1 as described above.

Advantageously, in the case of a coffee dispensing machine comprising a pump 50 with sensorized accessory 1, the fluid outgoing from the sensorized outlet conduit 5 can be sent directly to the coffee dispensing group as it has, thanks to the control carried out on the flow and/or pressure parameters that can be carried out by means of the detection device 7, the ideal, and already set, parameters for the subsequent dispensing. In the event of different dispensing groups, operating independently of one another, being present in the coffee machine, the sensorized accessory 1 may comprise a plurality of sensorized outlet conduits 5, 5', each with its own detection device 7, 7', so that each dispensing group of the machine can receive a quantity of water under pressure and at a temperature suitable for the specific required dispensing.

Advantageously, moreover, the free outlet conduit 6 can be placed in fluid communication with the boiler of the coffee machine, thus allowing the pump 50, at any instant, to charge the boiler with new water.

The free outlet conduit 6 may also supply water for further services. For example, a hot water dispensing group for the preparation of other beverages, such as tea or beverages obtained from soluble products, can be fed by means of the free outlet conduit 6.

Advantageously, the coffee machine can comprise:
- a source of water supply, derived from the water network or a reservoir,
- a boiler, adapted to heat the water,
- at least one coffee dispensing group,
- a pump 50 provided with the sensorized accessory 1 as described above,
- an own control unit intended for profiling the flow rate and/or pressure and/or temperature values of the water sent to the dispensing group to obtain an optimal extraction of the coffee, on the basis of a preset recipe.

The signals indicative of the flow and/or pressure detected by the detection device 7 can be sent to the control unit of the coffee machine, which processes them and uses them to control, in a closed-loop feedback, the operating parameters of the pump 50 and/or of the boiler in order to ensure that the pressure and/or flow and/or temperature parameters of the water are those required by the coffee extraction recipe.

The processing unit 70 of the sensorized accessory 1 may be placed in data communication with the control unit of the coffee machine, or be integrated inside the control unit of the coffee machine.

For example, as illustrated in figure 6, the sensorized accessory processing unit 70 may be placed in data communication, by means of the connector 71, with the control unit of the coffee machine. The motor group 52 of the pump 50 can also be placed in data communication with the control unit of the coffee machine, for example by means of its own connector 520.

In practice, it has been found that the sensorized accessory, according to the present invention, fulfils the task as well as the intended purposes as it allows a pump, even of a traditional type, to be provided with the function of detecting the properties of the flow of pumped fluid, such as flow rate, pressure and temperature.

Another advantage of the sensorized accessory, according to the invention, consists in making a pump of the traditional type controllable in feedback to ensure that it dispenses fluids at desired flow rates and pressures.

A further advantage of the sensorized accessory, according to the invention, consists in simplifying the hydraulic and electrical circuits of the beverage dispensing machines, as the pump with the sensorized accessory applied to it integrates all the control functions of the dispensing parameters. In particular, the dispensing group of a beverage dispensing machine can be directly connected to the sensorized outlet conduit of the sensorized accessory to obtain a working machine solution.

With particular reference to the coffee machine sector, a further advantage of the sensorized accessory, according to the invention, consists in allowing the profiling of the flow rates and/or pressures of the coffee extraction water on the basis of the recipes for extracting the coffee itself.

Yet another advantage of the invention consists in that only pressure sensors are used to detect both the pressure and flow rate values of the fluid flow. In addition, the pressure sensors do not require direct contact with the fluid. Similarly, even the temperature sensor does not require a direct contact with the fluid.

A further advantage of the sensorized accessory applied to a pump consists in being able to dispense a desired and precise amount of fluid at a precise pressure, and, in the event that also means for heating the fluid, such as a boiler in a coffee machine, are present, even at a precise temperature.

The sensorized accessory for pumps thus conceived is susceptible to numerous modifications and variants all falling within the scope of the inventive concept.

Furthermore, all the details can be replaced by other technically equivalent elements.

In practice, any materials can be used according to requirements, as long as they are compatible with the specific use, the dimensions and the contingent shapes.

## Claims

1. A sensorized accessory (1) for pumps, particularly for coffee machines, comprising an inlet fitting (2) configured to be coupled to a delivery port (51) of a pump (50) and a body (3) inside which the followings are realized:
- an inlet conduit (4) configured to be placed in fluid communication with said delivery port (51) of said pump (50) by means of said inlet fitting (2);
- at least one sensorized outlet conduit (5), in fluid communication with said inlet conduit (4), a detection device for detecting (7) the flow and/or pressure of a fluid flowing along said at least one sensorized outlet conduit (5) being associated to said at least one sensorized outlet conduit (5), said detection device (7) being adapted to generate signals indicative of the flow and/or pressure of said fluid.

2. A sensorized accessory (1), according to the preceding claim, wherein, at least one free outlet conduit (6) is realized inside said body (3), in fluid communication with said inlet conduit (4).

3. A sensorized accessory (1), according to one or more of the preceding claims, wherein said detection device (7) is adapted to generate also a signal indicative of the temperature of said fluid flowing along said at least one sensorized outlet conduit (5).

4. A sensorized accessory (1), according to the preceding claim, wherein said detection device (7) comprises an infrared temperature sensor (T).

5. A sensorized accessory (1), according to one or more of the preceding claims, wherein said at least one sensorized outlet conduit (5) has at least two distinct cross-sections (S1, S2) distributed along the axial development direction (A) of said at least one sensorized outlet conduit (5) and wherein at least one first cross-section (S1) has a sectional area that has an extension larger or smaller, preferably larger, than the sectional area of the second cross-section (S2) downstream of said first cross-section (S1) and wherein said detection device (7) comprises at least two pressure sensors (P1, P2) arranged in correspondence of said two distinct cross-sections (S1, S2) of said at least one sensorized outlet conduit (5) and configured to detect the instantaneous pressure of said fluid in correspondence of said two distinct cross-sections (S1, S2) of said at least one sensorized outlet conduit (5), said detection device (7) being adapted to generate signals indicative of the flow and/or pressure of said fluid on the basis of said instantaneous pressure detected in correspondence of said two distinct cross-sections (S1, S2).

6. A sensorized accessory (1), according to one or more of claims 2 to 5, wherein said free outlet conduit (6) comprises a restriction (8) configured to equalize the flows of said fluid outgoing through said at least one sensorized outlet conduit (5) and said free outlet conduit (6).

7. A sensorized accessory (1), according to one or more of the preceding claims, wherein said detection device (7) comprises a processing unit (70) configured to acquire and process one or more of said signals indicative of the pressure and/or flow and/or temperature of said fluid flowing along said at least one sensorized outlet conduit (5), said detection device (7) comprising an electrical connector (71) configured to make said acquired and processed signals available to an external device.

8. A sensorized accessory (1), according to one or more of the preceding claims, wherein said inlet fitting (2) comprises a mechanism for locking to said delivery port (51) of said pump (50), which mechanism being selected from a mechanical locking mechanism, a screw-locking mechanism, a clip-locking mechanism, a snap-locking mechanism, or a magnetic locking mechanism.

9. A sensorized accessory (1), according to one or more of the preceding claims, wherein said inlet fitting (2) comprises a first locking element configured to couple stably with a corresponding second locking element present in said pump (50).

10. A sensorized accessory (1), according to claim 9, wherein said first locking element and said second locking element constitute a quick lock-and-release system.

11. A sensorized accessory (1), according to claim 9, wherein said first locking element is defined by a seat (14) configured to receive the arms of an elastic fork (54) present in said pump (50) and defining said second locking element.

12. A pump (50) comprising a sensorized accessory (1) according to one or more of the preceding claims associated with said pump (50).

13. A pump (50), according to claim 12, comprising a motor group (52) operable on the basis of said signals indicative of the flow and/or pressure of said fluid generated by said detection device (7).

14. A machine for dispensing a beverage, preferably coffee, comprising a pump (50) according to claims 12 or 13.

15. A coffee dispensing machine comprising:
- a source of water supply,
- a boiler,
- at least one coffee dispensing group,
- a pump (50), according to claims 12 or 13, adapted to send the water of said source of water supply to said boiler and to said at least one coffee dispensing group,
- a control unit configured to control said boiler and said pump (50) on the basis of said signals indicative of the flow and/or pressure and/or temperature detected by said detection device (7).
